# EUROPÄISCHE PATENTSCHRIFT

(11) **EP 0 873 900 B1**
(45) Veröffentlichungstag und Bekanntmachung des Hinweises auf die Patenterteilung: **05.12.2001**
(21) Anmeldenummer: 98106331.6
(22) Anmeldetag: 07.04.1998
(51) Int. Cl.: B60K 15/04

(54) **Kraftfahrzeugtank**
Motor vehicle fuel tank
Réservoir de carburant de véhicle automobile

(30) Priorität: 22.04.1997 DE 19716812
(43) Veröffentlichungstag der Anmeldung: 28.10.1998
(73) Patentinhaber: Kautex Textron GmbH & Co. KG., 53229 Bonn (DE)
(72) Erfinder: Krings, Frank, 53347 Alfter (DE)
(74) Vertreter: Koepsell, Helmut, Dipl.-Ing.

(56) Entgegenhaltungen:
- EP-A- 0 636 505
- DE-U- 7 601 633
- FR-A- 2 741 014
- GB-A- 2 283 011
- US-A- 4 008 831
- PATENT ABSTRACTS OF JAPAN vol. 097, no. 002, 28. Februar 1997 -& JP 08 268093 A (PIOLAX INC;NISSAN MOTOR CO LTD), 15. Oktober 1996

## Beschreibung

Die Erfindung betrifft einen Kraftfahrzeugtank gemäß dem Oberbegriff des Anspruches 1.

Beim Füllen eines derartigen Tanks wird der in gasförmiger Phase vorliegende Kraftstoff, der sich oberhalb des Flüssigkeitsspiegels befindet, durch den in den Tank einströmenden flüssigen Kraftstoff verdrängt. Dabei ist darauf zu achten, daß, wenn überhaupt, nur minimale Mengen des in gasförmiger Phase vorliegenden Kraftstoffes in die Atmosphäre gelangen. So ist es heute üblich, einen derartigen Kraftstofftank mit einem Aktivkohle-Filter (AKF) zu versehen, durch welchen das durch den ansteigenden Flüssigkeitsspiegel verdrängte Gasgemisch strömt, wobei die Kohlenwasserstoffe zumindest weitgehend von der Aktivkohle - oder anderem geeigneten Filtermaterial - adsorbiert werden.

Allerdings muß auch mit der Möglichkeit gerechnet werden, daß zumindest ein Teil der oberhalb des Flüssigkeitsspiegels anstehenden Gase durch den Füllstutzen aus dem Tank verdrängt wird und in die Atmosphäre gelangt. Dies ist immer dann möglich, wenn der Querschnitt des Füllrohres beim Füllvorgang nur unvollständig mit Kraftstoff gefüllt ist derart, daß freie, also vom Kraftstoff nicht ausgefüllte Querschnittsbereiche verbleiben, durch die Gase und Dämpfe entgegen der Fließrichtung des Kraftstoffes strömen und so in die Atmosphäre gelangen können. Es ist zwar bereits in Erwägung gezogen worden, dieser Möglichkeit dadurch zu begegnen, daß im Füllrohr Manschetten od. dgl. aus elastischem Material vorgesehen sind, die sich dichtend an die äußere Mantelfläche der Zapfpistole legen und somit den von letzterer nicht ausgefüllten Querschnitt verschließen. Es hat sich jedoch herausgestellt, daß dadurch nicht zuletzt auch im Hinblick auf auftretenden Verschleiß, eine wirksame Abdichtung auf Dauer nicht zu erreichen ist.

Es wird zwar allgemein angestrebt, das Füllrohr so weit wie möglich in den Tank hineinzuführen, um den Abstand vom Ende des Füllrohres, aus welchem der Kraftstoff austritt, und dem Boden des Tanks so klein wie möglich zu halten, da in dem Augenblick, in welchem dieses Füllrohrende vollständig unterhalb des Flüssigkeitsspiegels liegt, die untere Öffnung des Füllrohres durch flüssigen Kraftstoff verschlossen ist und somit keine Gase am unteren Ende des Füllrohres in dieses eintreten können. Aus praktischen Gründen ist es jedoch vielfach nicht möglich, das Füllrohr so kurz über dem Boden enden zu lassen, daß dadurch das Einströmen von gasförmigem Kraftstoff in das Füllrohr durch dessen untere Öffnung verhindert oder zumindest in ausreichendem Maße reduziert würde. Zu den Gegebenheiten, die es zweckmäßig erscheinen lassen, das Füllrohr nicht unmittelbar über dem Boden des Tanks enden zu lassen, gehört der mit abnehmendem Abstand zwischen Füllrohrende und gegenüberliegender Tankwandung, also beispielsweise dem Tankboden, zunehmende Strömungswiderstand beim Einfüllvorgang. Zudem macht es die in vielen Fällen außerordentlich komplizierte Gestalt von Kraftfahrzeugtanks unmöglich, das Ende des Füllrohres in einem so kurzen Abstand vom Tankboden anzuordnen, daß die vorstehend beschriebenen Probleme nicht oder nur in einem vernachlässigbaren Maße aufträten.

Aus der GB 2 283 011 A mit den Merkmalen des Oberbegriffs des unabh Anspruchs 1 ist beispielsweise ein Einfüllstutzen für einen Kraftfahrzeugtank bekannt, an dessen Ende ein schlaffer flexibler, als Rückschlagventil ausgebildeter Abschnitt vorgesehen ist, der am Ende des Einfüllstutzens in den Kraftstofftank herunterhängt. Der den flexiblen Schlauchabschnitt umgebende Kraftstoff bewirkt ein Zusammendrücken desselben, wodurch dieser als Rückschlagventil ein Aufsteigen des Kraftstoffs in dem Einfüllrohr verhindert. Ein Austreten kohlenwasserstoffhaltiger Gase aus dem Tank wird nur dann zuverlässig verhindert, wenn das auslaufseitige Ende des Rückschlagventils sich unterhalb des Kraftstoffspiegels im Tank befindet. Bereits wenn der Füllzustand des Tanks dem Reservezustand entspricht, ist dies in der Regel nicht mehr gewährleistet, denn bei einigen gebräuchlichen Tankkonstruktionen fördert die Kraftstoffpumpe dann nur noch aus dem Schwalltopf bzw. dem Reservoir für ein bestimmtes Reservevolumen. Außerdem kann mit einer solchen Anordnung nicht sichergestellt werden, daß in dem Einfüllstutzen vorhandene Gase und Dämpfe nicht entgegen der Fließrichtung des Kraftstoffes aus dem Einfüllstutzen heraustreten.

Eine ähnliche Anordnung ist beispielsweise aus der JP 08268093 A (Patent Abstracts of Japan, Vol. 097, No. 002, 28. Februar 1997) bekannt.

In der DE 76 01 633 U wird bei einem Kraftstofftank zur Begrenzung des Rückschwalls beim Betanken ebenfalls vorgeschlagen, in dem Einfüllstutzen ein Rückschlagventil in Form eines Lippendichtventils aus Gummi vorzusehen, das den Kraftstoff in der Füllrichtung leicht durchläßt, in Rückschwallrichtung des Kraftstoffs jedoch bremsend wirkt. Dabei soll sichergestellt werden, daß ein Anteil der Entlüftungsluft beim Befüllen ständig aus dem Einfüllstutzen in die Atmosphäre austreten kann.

Demzufolge liegt der Erfindung die Aufgabe zugrunde, einen Kraftfahrzeugtank der einleitend beschriebenen Art so auszubilden, daß das Ausströmen von Gasgemischen durch das Füllrohr während des Füllvorganges zumindest weitestgehend vermieden wird, und zwar auch dann, wenn beim Füllvorgang nur wenig Kraftstoff pro Zeiteinheit durch das Füllrohr fließt.

Diese Aufgabe wird mit den im Kennzeichen des Anspruches 1 angegebenen Mitteln gelöst.

Die Erfindung basiert auf der Überlegung, daß auch bei einer geringen Kraftstoffmenge pro Zeiteinheit, die durch das Füllrohr in den Tank fließt, zumindest in diesem verengten Bereich der Querschnitt vollständig mit Kraftstoff ausgefüllt sein soll. Aufgrund von Erfahrungswerten besteht ohne weiteres die Möglichkeit, die Größe des Durchgangsquerschnittes im verengten Bereich so zu wählen, daß auch dann, wenn nur kleinere Kraftstoffmengen pro Zeiteinheit durch das Füllrohr strömen, dieser Querschnitt völlig ausgefüllt ist und somit die geringe Kraftstoffmenge ausreicht, das sogenannte Liquid Seal zu bewirken. Andererseits stellt dieser verengte Querschnittsbereich jedoch keinen den Befüllvorgang behindernden Strömungswiderstand dar, da es ohne weiteres möglich ist, die Elastizität des diesen verengten Querschnittbereich begrenzenden Materials so auszuwählen, daß es unter der Einwirkung der Strömungsenergie des im Füllrohr fließenden Kraftstoffes selbsttätig aufgeweitet wird, und zwar entsprechend der Kraftstoffmenge pro Zeiteinheit, so daß unter allen Umständen und auch bei schwankender Kraftstoffzufuhr eine Gewähr dafür gegeben ist, daß der Querschnitt des Füllrohres wenigstens in dem Abschnitt, der in unbeanspruchtem Zustand verengt ist, immer vollständig mit Kraftstoff gefüllt ist. Zumindest der den verengten Querschnitt aufweisende Abschnitt des Füllrohres ist vorteilhafterweise aus Kunststoff hergestellt, wobei es auch ohne weiteres möglich ist, das gesamte Füllrohr einstückig aus Kunststoff herzustellen.

In der Zeichnung sind zwei Ausführungsbeispiele der Erfindung im Schema dargestellt. Es zeigen:
- Fig. 1: einen Kraftstofftank für ein Kraftfahrzeug,
- Fig. 2: einen Abschnitt der Fülleitung mit verengtem Querschnitt in Seitenansicht,
- Fig. 3: die dazugehörige Draufsicht,
- Fig. 4: einen Schnitt nach der Linie IV-IV der Fig. 3,
- Fig. 5: eine der Fig. 2 entsprechende Ansicht einer zweiten Ausführungsform,
- Fig. 6: eine der Fig. 3 entsprechende Ansicht dieser zweiten Ausführungsform,
- Fig. 7: einen Schnitt nach der Linie VII-VII der Fig. 6.

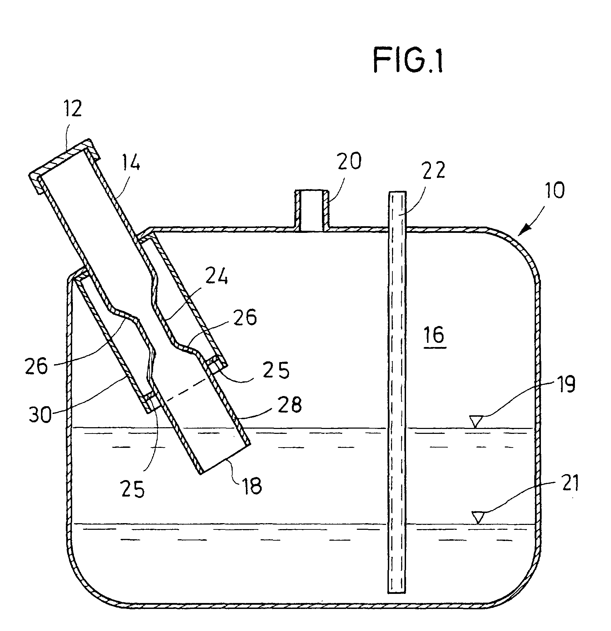

Der in Fig. 1 dargestellte Tank 10 ist mit einem mittels eines Deckels 12 verschließbaren Füllrohr 14 versehen, welches in den Innenraum 16 des Tankes 10 so weit hineinragt, daß die am unteren Ende 18 befindliche Austrittsöffnung für den Kraftstoff sich im unteren Bereich des Innenraums 16 befindet. Allerdings stellt Fig. 1 den Tank in stark vereinfachter Form dar. In der Praxis wird der Tank in Abhängigkeit von dem Kraftfahrzeug, in welchem er einzubauen ist, eine ggf. sehr komplizierte Gestalt aufweisen. Dies gilt insbesondere dann, wenn der Tank aus Kunststoff, insbesondere thermoplastischem Kunststoff, hergestellt ist.

Der Tank 10 ist ferner oberseitig mit einem Stutzen 20 versehen, durch welchen die oberhalb des Flüssigkeitsspiegels 19 bzw. 21 befindlichen Gase und Dämpfe beim Befüllen des Tankes austreten können. Am Stutzen 20 ist ein Aktivkohle-Filter angeschlossen, welches die Kohlenwasserstoffe - und ggf. auch andere Substanzen - weitestgehend adsorbiert und somit verhindert, daß diese in die Atmosphäre gelangen. Mit 22 ist eine Entnahmeleitung bezeichnet.

Sobald der Flüssigkeitsspiegel im Tank eine Höhe erreicht hat, bei welcher die Austrittsöffnung 18 für den Kraftstoff sich unterhalb des Flüssigkeitsspiegels befindet, wie es beispielsweise bei dem in Fig. 1 angedeuteten Flüssigkeitsspiegel 19 der Fall ist, können keine Gase und Dämpfe mehr aus dem Tank durch das Füllrohr 14 austreten. Jedoch sind bis zum Erreichen eines solchen Flüssigkeitsspiegels, also beispielsweise bei dem Füllstand, der durch den Flüssigkeitsspiegel 21 angedeutet ist, Vorkehrungen zu treffen, um ein Austreten von Kraftstoffdämpfen und/oder -gasen durch das Füllrohr 14 in die Atmosphäre zu verhindern.

Dazu ist das Füllrohr 14 in seinem innerhalb des Tanks 10 befindlichen Bereich mit einem Abschnitt 24 mit verengtem Durchmesser versehen, der aus elastisch leicht verformbarem Material besteht und an jedem Ende über jeweils einen Übergangsbereich 26 mit den daran anschließenden Abschnitten 28 aus starrem Material verbunden ist.

Die vorstehend verwendeten Begriffe bedeuten, daß das den Abschnitt 24 mit verengtem Durchmesser bildende elastische Material einerseits ausreichend flexibel ist, um sich unter der Einwirkung der Strömungsenergie des ihn durchfließenden Kraftstoffes unter Vergrößerung des freien Querschnittes elastisch auszudehnen bzw. sich bei abnehmender Kraftstoffmenge pro Zeiteinheit elastisch zusammenzuziehen, um so die Größe des freien Querschnittes für den Durchgang des Kraftstoffes an die jeweilige Menge pro Zeiteinheit anzupassen, damit der gesamte Querschnitt mit Kraftstoff gefüllt ist. Letzterer bildet zumindest in diesem Bereich mit variablem Querschnitt das bereits erwähnte Liquid Seal. Dabei sind auch die Übergänge 26 aus elastisch verformbarem Material hergestellt. Die daran anschließenden starren Abschnitte können selbstverständlich auch eine gewisse elastische Verformbarkeit aufweisen, wie sie bei Kunststoffrohren im allgemeinen üblich ist. Die Verwendung des Begriffes "starr" bedeutet hier, daß eine Verformung durch die beim normalen Betrieb auf das Füllrohr einwirkenden Kräfte, also auch durch die auf die Strömungsenergie zurückgehenden Kräfte, nicht eintritt.

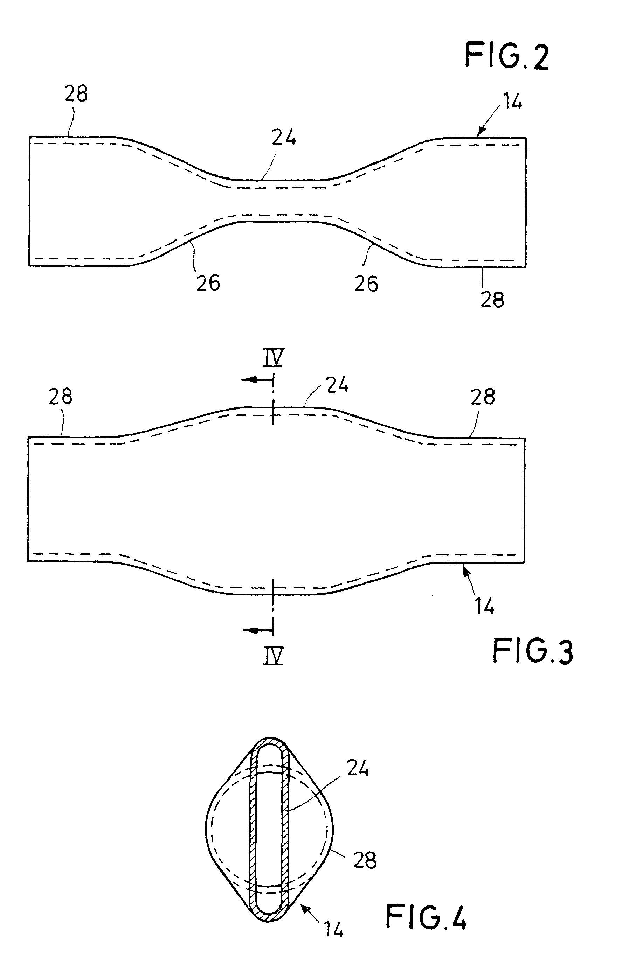

Wie insbesondere die Fig. 3 und 4 erkennen lassen, wird der Abschnitt 24 mit verengtem Abschnitt auf einfache Weise dadurch hergestellt, daß der den Abschnitt 24 tragende Bereich des Füllrohres 14 zusammengedrückt wird, um im verengten Bereich eine etwa elliptische Querschnittsform zu erhalten, wie dies insbesondere Fig. 4 erkennen läßt. Diese Querschnittsform stellt sich bei unbelastetem Füllrohr bzw. Abschnitt 24 ein. Der sich dabei ergebende freie Querschnitt kann ohne weiteres so gewählt werden, daß er etwa der im praktischen Betrieb in Betracht kommenden kleinsten Kraftstoffmenge pro Zeiteinheit - z. B. 13 - 15 l/min. - entspricht, die durch das Füllrohr fließt. Wie groß dazu der Querschnitt sein muß, läßt sich durch einfache Versuche feststellen. Bei Zunahme der das Füllrohr durchströmenden Kraftstoffmenge pro Zeiteinheit, die bei normaler Füllgeschwindigkeit maximal etwa 50 - 60 l/min. beträgt, bewirkt die Strömungsenergie eine entsprechende selbsttätige Aufweitung des Abschnittes 24 und ggf. auch der angrenzenden Bereiche 26, so daß der gesamte Querschnitt in diesem Bereich immer vollständig mit Flüssigkeit gefüllt ist.

Die Anordnung des verengten Bereiches 24 im Füllrohr 14 sollte so gewählt werden, daß er weit genug entfernt vom Ende der in das Füllrohr 14 eingesteckten Zapfpistole ist. Der Abstand ist so zu wählen, daß einerseits die Strömung des Kraftstoffstrahls den verengten Bereich 24 so aufweitet, daß kein Rückstau entsteht, welcher zum Schließen der automatischen Zapfpistole führen kann, und andererseits der Strahl nicht mehr so kräftig ist, daß er den verengten Bereich durch partielle Beaufschlagung öffnen kann, ohne daß der Kraftstoff den gesamten Querschnitt ausfüllt. Im übrigen ist die Elastizität des den verengten Bereich 24 bildenden Materials so zu wählen, daß im wesentlichen die Strömungsenergie des fließenden Kraftstoffes ein Aufweiten des verengten Bereiches bewirkt, dessen Umfangsgröße sich nicht verändert.

Aus den vorstehenden Erläuterungen ergibt sich, daß der geringstmögliche Querschnitt der im praktischen Betrieb auftretenden unteren Kraftstoffmenge pro Zeiteinheit, welche z. B. in dahingehenden Vorschriften festgelegt ist, entspricht und der im wesentlichen kreisrunde Querschnitt des Füllrohres 14 und bei maximaler elastischer Aufweitung des Bereiches 24 der größten Kraftstoffmenge pro Zeiteinheit bzw. der sich daraus ergebenden Strömungsgeschwindigkeit entspricht.

Das Füllrohr gemäß den Fig. 2 - 4 kann z. B. in der Weise hergestellt werden, daß in einem durchgehenden Extrusionsvorgang die Kunststoffmaterialien mit unterschiedlichen elastischen Eigenschaften sequentiell extrudiert werden derart, daß sich im verengten Bereich 24 und in den anschließenden Übergangsbereichen 26 ein nach Abkühlung und Verfestigung leicht elastisch verformbares Material befindet und für den jeweils daran anschließenden Bereich ein Material verwendet wird, welches nach Abkühlung und Verfestigung im vorstehend beschriebenen Sinne starr ist. Es besteht somit ohne weiteres die Möglichkeit, im Bedarfsfall das Füllrohr in seiner Gesamtheit einstückig herzustellen. Der Bereich 24 mit verengtem Querschnitt kann auf einfache Weise dadurch geformt werden, daß das Füllrohr in diesem Abschnitt in noch warmplastischem Zustand flachgedrückt wird, so daß es die gewünschte Querschnittsform annimmt. Dies kann beispielsweise bei Verwendung von Stützluft, die das Innere des noch warmplastischen Rohres unter einem geringen Überdruck hält, ohne weiteres in kontrollierter und wiederholbarer Weise durchgeführt werden, beispielsweise in einer Blasform.

Es ist selbstverständlich auch möglich, das Füllrohr aus mehreren Abschnitten, die lösbar oder fest miteinander verbunden sind, zusammenzusetzen. In diesem Fall kann der die Verengung des Füllrohres bildende bzw. aufweisende Abschnitt, der elastisch aufweitbar ist, als besonderes Teil gefertigt werden, dessen Endbereiche dem Querschnitt der daran anschließenden Rohrabschnitte entsprechend, also normalerweise kreisförmig, ausgebildet sind. Die für die Verbindung mit dem jeweils benachbarten Rohrabschnitt erforderliche Steifigkeit kann durch entsprechende Bemessung der Wandstärke erreicht werden. Es ist aber auch möglich, diesen Abschnitt durch sequentielles Extrudieren, d.h. durch aufeinanderfolgendes Extrudieren von Materialien mit unterschiedlichen Eigenschaften, herzustellen.

Der im Innenraum 16 des Tanks 10 befindliche Abschnitt des Füllrohres 14 ist von einer rohrförmigen Halterung 30 umgeben, die auch als Gitter oder in ähnlicher Weise ausgebildet sein kann und einen Innendurchmesser aufweist, der größer ist als der Außendurchmesser des Füllrohres 14 im nicht verengten Bereich. Diese Halterung 30 soll verhindern, daß das Füllrohr 14 unter der Einwirkung des eigenen Gewichtes im elastischen Abschnitt 24 derart stark nach unten abknickt, daß der Querschnitt vollständig verschlossen oder so verformt würde, daß ein einwandfreies Funktionieren des Füllrohres bzw. des verengten Abschnittes 24 desselben nicht gewährleistet wäre. Dazu kann es vorteilhaft sein, radiale oder sonstwie verlaufende Stützen 25 vorzusehen, die zwischen der Halterung 30 und dem starren Abschnitt 28 angeordnet sind, der sich nach unten an den verengten Abschnitt 24 anschließt. Anstelle einzelner Stützen 25 kann auch ein ringförmiges Gitter oder dgl. als Stützelement verwendet werden.

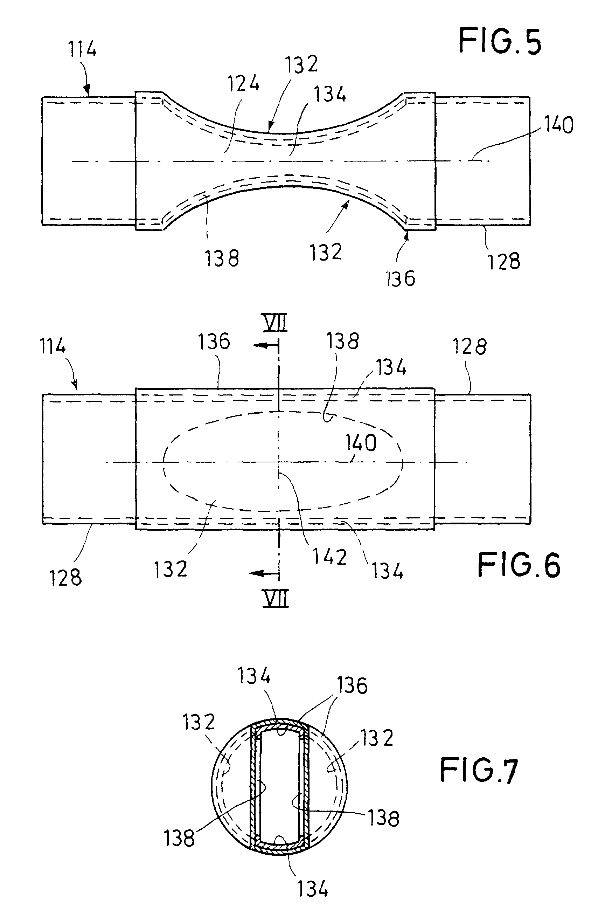

Bei der Ausführungsform gemäß den Fig. 5 - 7 sind Teile, die mit denen der Ausführungsform gemäß den Fig. 1 - 4 übereinstimmen, mit gleichen, jedoch um 100 höheren Bezugszeichen versehen.

Der wesentliche Unterschied zwischen beiden Ausführungsformen besteht darin, daß bei der Ausführungsform gemäß den Fig. 5 - 7 das eigentliche Füllrohr 114 im verengten Abschnitt 124 starr ausgebildet, jedoch mit zwei einander gegenüberliegenden, also in Umfangsrichtung um 180° versetzt angeordneten Öffnungen 132 versehen ist, die, wie insbesondere Fig. 6 erkennen läßt, in Draufsicht etwa elliptisch begrenzt sind. Die längere Achse der Ellipse verläuft in Längsrichtung des Füllrohres 114. Die durch das Anbringen der Öffnungen entstehende Konfiguration kann auch so definiert werden, daß im Bereich der Öffnungen 132 vom Mantel des Füllrohres 114 zwei einander gegenüberliegende Stege 134 stehenbleiben, die sich jeweils von einer quer zur Längsachse verlaufenden Ebene, die entlang der kürzeren Achse der Ellipse verläuft, in der die Stege 134 jeweils ihre geringste Breite haben, in beiden Richtungen sich verbreiternd erstrecken, bis sie am jeweiligen axialen Ende der Öffnung 132 zur Bildung des vollständigen Mantels ineinander übergehen.

Das Füllrohr 114 ist im Bereich der Öffnung 132 und axial etwas darüber hinausgehend mit einer Manschette 136 versehen, die aus hochelastischem Material, beispielsweise Polyurethan oder Silikon-Kunststoff besteht, schlauchförmig ausgebildet ist und einen Innendurchmesser aufweist, der in ungedehntem Zustand der Manschette kleiner ist als der Außendurchmesser des Füllrohres 114.

Aufgrund ihrer elastischen Verformbarkeit verläuft die Manschette 136 im Bereich der beiden Löcher 132 entlang den Begrenzungskanten 138 derselben mit der Folge, daß die die Löcher überdekkenden Bereiche der Manschette 136 im Abschnitt 124 einen Teil der Begrenzung des Füllrohres 114 bilden, wobei diese Bereiche der Manschette, wie insbesondere Fig. 5 erkennen läßt, einen geringeren Abstand von der Längsachse 140 des Füllrohres aufweisen als die an den Abschnitt 124 angrenzenden vollständig starren Bereiche 128 des Füllrohres 114, wodurch die Querschnittsverengung bewirkt wird. Die Größe des kleinsten Durchgangsquerschnittes hängt bei dieser Ausführungsform somit von der Breite der Stege 134 im Bereich der kürzeren Achse 142 der jeweiligen elliptischen Öffnung 132 ab.

Die erforderliche Dichtigkeit zwischen der äußeren Mantelfläche des Füllrohres 114 und der Manschette 136 kann auf einfache Weise dadurch erreicht werden, daß die Manschette ausreichend weit über die anschließenden Bereiche 128 des Füllrohrs mit vollständiger umlaufender Wandung gezogen wird.

Bei der Ausführungsform gemäß den Fig. 5 - 7 würde somit nicht ein Teil des eigentlichen, ggf. einstückigen Füllrohres in Abhängigkeit von der Kraftstoffmenge pro Zeiteinheit aufgeweitet werden oder sich zusammenziehen, sondern vielmehr die Manschette 136.

## Patentansprüche

1. Krafstofftank (10) für ein Kraftfahrzeug, mit einem Füllrohr (14), das einen Abschnitt (24) aufweist, welcher zumindest über Teilbereiche seines Umfangs elastisch verformbar und mit einem verengten, variablen Querschnitt ausgebildet ist, **dadurch gekennzeichnet, daß** sich an den elastisch verformbaren Abschnitt (24) beiderseitig starre Abschnitte (28) anschließen und daß der verengte Bereich des Füllrohrs (14) einen verbleibenden freien Querschnitt aufweist, der so gewählt ist, daß er die bei der Betankung in Betracht kommende kleinste Kraftstoffmenge durchläßt.

2. Tank nach Anspruch 1, **dadurch gekennzeichnet, daß** der elastisch verformbare Abschnitt (24) eine annähernd elliptische Querschnittsform aufweist.

3. Tank nach Anspruch 1, **dadurch gekennzeichnet, daß** ein starrer Abschnitt (124) des Füllrohres (114) in seiner Mantelfläche mit wenigstens einer Öffnung (132) versehen ist, die durch eine Manschette (136) aus elastischem Material, welche den Abschnitt unter Vorspannung umgibt, verschlossen ist, und die Öffnung (132) so bemessen und angeordnet ist, daß die letztere abdeckende Manschette (136) zumindest in unbeanspruchtem Zustand in den Querschnitt des Füllrohres, der durch dessen angrenzenden starren Abschnitt (128) bestimmt wird, hineinragt.

4. Tank nach Anspruch 3, **dadurch gekennzeichnet, daß** das Füllrohr (114) mit zwei um 180° gegeneinander versetzt angeordneten Öffnungen (132) versehen ist.

5. Tank nach wenigstens einem der vorhergehenden Ansprüche, **dadurch gekennzeichnet, daß** Füllrohr (14) und/oder Manschette (136) aus thermoplastischem Kunststoff bestehen.

6. Tank nach Anspruch 1, **dadurch gekennzeichnet, daß** das Füllrohr (14) einstückig aus unterschiedlichen Materialien hergestellt ist derart, daß zumindest an einem Ende des Abschnittes (24) aus elastischem Material ein Abschnitt (24) aus starrem Material anschließt.

7. Tank nach Anspruch 1, **dadurch gekennzeichnet, daß** der eine Verengung des Füllrohres bildende, elastisch aufweitbare Abschnitt, der ggf. gesondert gefertigt ist, einstückig aus unterschiedlichen Materialien hergestellt ist derart, daß zumindest an einem Ende des Bereichs aus elastischem Material ein Bereich aus starrem Material anschließt.

8. Tank nach Anspruch 1, **dadurch gekennzeichnet, daß** das Füllrohr (14) sich in den Innenraum des Tanks hinein erstreckt.

## Claims

1. A fuel tank (10) for a motor vehicle, comprising a filler pipe (14) having a portion (24) which at least over parts of its periphery is elastically deformable and is of a constricted variable cross-section, **characterised in that** rigid portions (28) adjoin the elastically deformable portion (24) on both sides and that the constricted region of the filler pipe (14) has a remaining free cross-section which is so selected that it allows through the smallest amount of fuel to be considered when refuelling.

2. A tank according to claim 1 **characterised in that** the elastically deformable portion (24) is of an approximately elliptical cross-sectional shape.

3. A tank according to claim 1 **characterised in that** a rigid portion (124) of the filler pipe (114) is provided in its peripheral surface with at least one opening (132) closed by a sleeve (136) of elastic material which surrounds the portion under a prestress and the opening (132) is of such a size and arrangement that the sleeve (136) covering same projects at least in the non-loaded condition into the cross-section of the filler pipe which is determined by its adjoining rigid portion (128).

4. A tank according to claim 3 **characterised in that** the filler pipe (114) is provided with two openings (132) which are arranged displaced relative to each other through 180°.

5. A tank according to at least one of the preceding claims **characterised in that** the filler pipe (14) and/or the sleeve (136) comprise thermoplastic material.

6. A tank according to claim 1 **characterised in that** the filler pipe (14) is produced integrally from different materials in such a way that a portion (24) of rigid material adjoins at least one end of the portion (24) of elastic material.

7. A tank according to claim 1 **characterised in that** the elastically expandable portion which forms a constriction in the filler pipe and which is possibly produced separately is produced integrally from different materials in such a way that a region of rigid material adjoins at least one end of the region of elastic material.

8. A tank according to claim 1 **characterised in that** the filler pipe (14) extends into the internal space of the tank.

## Revendications

1. Réservoir de carburant (10) de véhicule automobile comprenant une conduite de remplissage (14) qui présente une section (24) qui est réalisée, au moins dans des zones partielles de sa circonférence, de manière élastiquement déformable et avec une section variable rétrécie, **caractérisé en ce que** des sections rigides (28) se raccordent de part et d'autre à la section élastiquement déformable (24) et **en ce que** la zone rétrécie de la conduite de remplissage (14) présente une section libre subsistante qui est déterminée de telle sorte qu'elle laisse passer la plus petite quantité de carburant envisageable lors du remplissage du réservoir.

2. Réservoir selon la revendication 1, **caractérisé en ce que** la section élastiquement déformable (24) présente une forme de section pratiquement elliptique.

3. Réservoir selon la revendication 1, **caractérisé en ce qu'**une section rigide (124) de la conduite de remplissage (114) est pourvue dans sa surface extérieure d'au moins une ouverture (132) qui est obturée par une manchette (136) en un matériau élastique, laquelle gaine la section sous précontrainte, et **en ce que** l'ouverture (132) est calculée et disposée de telle sorte que la dernière manchette qui la recouvre (136) s'étend au moins dans l'état non sollicité à l'intérieur de la section de la conduite de remplissage qui est déterminée par sa section rigide adjacente (128).

4. Réservoir selon la revendication 3, **caractérisé en ce que** la conduite de remplissage (114) est pourvue de deux ouvertures (132) disposées en décalage de 180° l'une par rapport à l'autre.

5. Réservoir selon au moins l'une des revendications précédentes, **caractérisé en ce que** la conduite de remplissage (14) et/ou la manchette (136) sont réalisées dans un matériau thermoplastique.

6. Réservoir selon la revendication 1, **caractérisé en ce que** la conduite de remplissage (14) est réalisée d'une seule pièce dans différents matériaux de telle sorte qu'une section (24) en un matériau rigide se raccorde au moins à une extrémité de la section (24) en un matériau élastique.

7. Réservoir selon la revendication 1, **caractérisé en ce que** la section élastiquement extensible formant un rétrécissement de la conduite de remplissage, qui est éventuellement réalisée de manière séparée, est réalisée d'une seule pièce dans différents matériaux de telle sorte qu'une zone en un matériau rigide se raccorde au moins à une extrémité de la zone en un matériau élastique.

8. Réservoir selon la revendication 1, **caractérisé en ce que** la conduite de remplissage (14) s'étend à l'intérieur du réservoir.
